# EUROPEAN PATENT APPLICATION

(11) **EP 3 336 407 A1**
(43) Date of publication of application: **20.06.2018**
(21) Application number: 16203949.9
(22) Date of filing: 14.12.2016
(51) Int. Cl.: F16P 3/14, E21B 41/00

(54) **APPARATUS FOR WORKPLACE DANGER ZONE**

(71) Applicant: Whittaker, Stanley, Windsor, Ontario N8Y 2V7 (CA)
(72) Inventor: Whittaker, Stanley, Windsor, Ontario N8Y 2V7 (CA)
(74) Representative: Gulde & Partner

(57) **Abstract**

An apparatus is for a user, a workplace danger zone, a hazardous workplace machine, a detector assembly and a computer assembly. The apparatus includes a garment configured to be worn by the user, and an identification device being configured to be coupled to the garment. The identification device is configured to be wirelessly detected.

## Description

### TECHNICAL FIELD

This document relates to the technical field of (and is not limited to) an apparatus for a workplace danger zone (and not limited thereto).

### BACKGROUND

Each year, millions of dollars are spent on what may be considered avoidable accidents. There are many safety practices already in existence, yet worker injuries still occur. Lost time injuries are a huge cost to businesses (such as, and not limited to, the gas and oil business).

### SUMMARY

It will be appreciated that there exists a need to mitigate (at least in part) at least one problem associated with existing workplace danger zones. After much study of the known systems and methods with experimentation, an understanding of the problem and its solution has been identified and is articulated as follows:

The solution is to provide an apparatus that removes human error factors (thereby reducing lost time injuries and associated costs).

To mitigate, at least in part, at least one problem associated with existing workplace danger zones, there is provided (in accordance with a major aspect) an apparatus. The apparatus is for a user, a workplace danger zone, a hazardous workplace machine, a detector assembly and a computer assembly. The apparatus includes a garment. The garment is configured to be worn by the user. The apparatus also includes a detection device. The detection device is configured to be coupled to the garment. The detection device is configured to be wirelessly detected.

Other aspects are identified in the claims.
Other aspects and features of the non-limiting embodiments may now become apparent to those skilled in the art upon review of the following detailed description of the non-limiting embodiments

### BRIEF DESCRIPTION OF THE DRAWINGS

with the accompanying drawings.

The non-limiting embodiments may be more fully appreciated by reference to the following detailed description of the non-limiting embodiments when taken in conjunction with the accompanying drawings, in which:
FIGS. 1A and 1B (SHEETS 1 and 2 of 5 SHEETS) depict views of embodiments of an apparatus for a user tasked with working in a workplace danger zone; and
FIGS. 2A, 2B, 2C, 2D, 2E, 2F and 2G (SHEETS 3 to 5 of 5 SHEETS) depict schematic views of embodiments of a garment and an identification device of the apparatus of FIG. 1.

The drawings are not necessarily to scale and may be illustrated by phantom lines, diagrammatic representations and fragmentary views. In certain instances, details unnecessary for an understanding of the embodiments (and/or details that render other details difficult to perceive) may have been omitted. Corresponding reference characters indicate corresponding components throughout the several figures of the drawings. Elements in the several figures are illustrated for simplicity and clarity and have not been drawn to scale. The dimensions of some of the elements in the figures may be emphasized relative to other elements for facilitating an understanding of the various disclosed embodiments. In addition, common, but well-understood, elements that are useful or necessary in commercially feasible embodiments are often not depicted to provide a less obstructed view of the embodiments of the present disclosure.

### LISTING OF REFERENCE NUMERALS USED IN THE DRAWINGS

- 100: apparatus
- 102: garment
- 104A: unauthorized identification device
- 104B: authorized identification device
- 104: identification device
- 106: hazardous workplace machine
- 107: lockout signal
- 108: detector assembly
- 109: emergency stop signal
- 110: computer assembly
- 112: input section
- 114: processing section
- 116: output section
- 900: user
- 902: workplace danger zone

### DETAILED DESCRIPTION OF THE NON-LIMITING EMBODIMENT(S)

The following detailed description is merely exemplary and is not intended to limit the described embodiments or the application and uses of the described embodiments. As used, the word "exemplary" or "illustrative" means "serving as an example, instance, or illustration." Any implementation described as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure. The scope of the invention is defined by the claims. For the description, the terms "upper," "lower," "left," "rear," "right," "front," "vertical," "horizontal," and derivatives thereof shall relate to the examples as oriented in the drawings. There is no intention to be bound by any expressed or implied theory in the preceding Technical Field, Background, Summary or the following detailed description. It is also to be understood that the devices and processes illustrated in the attached drawings, and described in the following specification, are exemplary embodiments (examples), aspects and/or concepts defined in the appended claims. Hence, dimensions and other physical characteristics relating to the embodiments disclosed are not to be considered as limiting, unless the claims expressly state otherwise. It is understood that the phrase "at least one" is equivalent to "a". The aspects (examples, alterations, modifications, options, variations, embodiments and any equivalent thereof) are described regarding the drawings. It should be understood that the invention is limited to the subject matter provided by the claims, and that the invention is not limited to the particular aspects depicted and described.

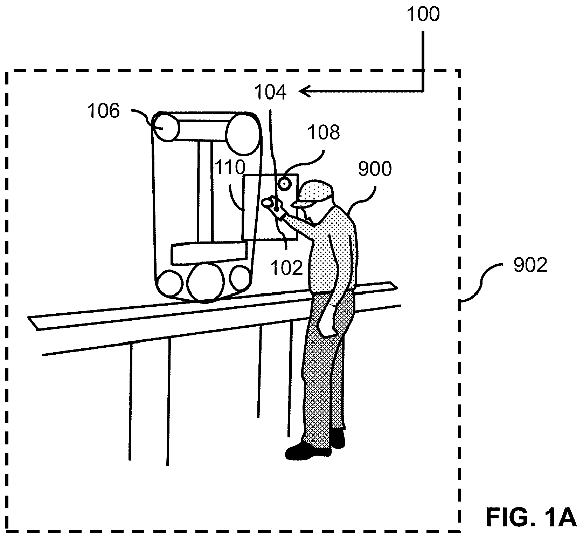

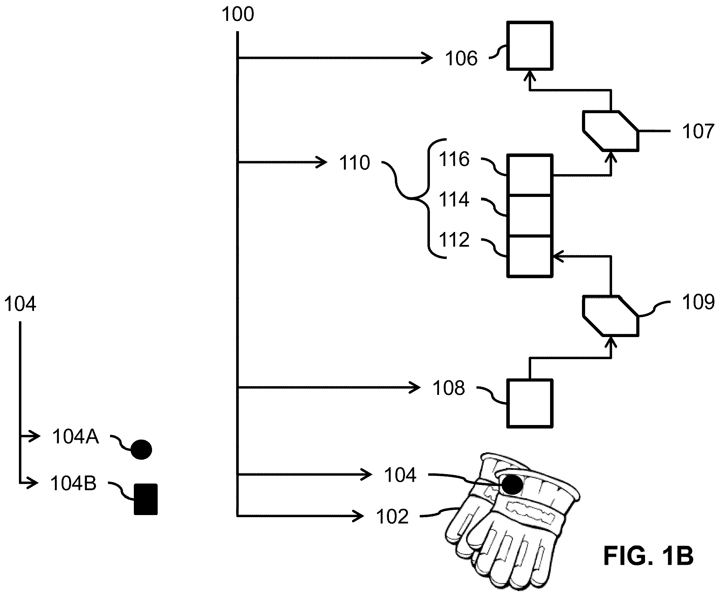

FIGS. 1A and 1B depict views of embodiments of an apparatus 100 for a user 900 tasked with working in a workplace danger zone 902. FIG. 1A depicts a perspective view of the apparatus 100. FIG. 1B depicts a schematic view of the apparatus 100.

In accordance with a first embodiment as depicted in FIGS. 1A and 1B, the apparatus 100 includes (and is not limited to) a combination of a garment 102, an identification device 104, a detector assembly 108 and a computer assembly 110. It will be appreciated that for this embodiment, the apparatus 100 does not include the combination of the user 900, the workplace danger zone 902 and the hazardous workplace machine 106. The hazardous workplace machine 106 is located (positioned) within the workplace danger zone 902. The hazardous workplace machine 106 is configured to be locked out in response to receiving a lockout signal 107.

The garment 102 is configured to be worn by the user 900. The identification device 104 is configured to be coupled to the garment 102. The identification device 104 is configured to be wirelessly detected. The identification device 104 may include a proximity sensor, a sensor assembly, etc. For instance, the identification device 104 may be fixedly and securely positioned at a predetermined position located on the garment 102.

The hazardous workplace machine 106 is located within the workplace danger zone 902. The hazardous workplace machine 106 is configured to be locked out in response to receiving a lockout signal 107. The lockout signal 107 may be called a shut-down signal, etc. The lockout signal 107 causes (urges) the hazardous workplace machine 106 to become locked out. This is done in such a way that the hazardous workplace machine 106 remains inoperable (stops operation altogether), which may or may not include powering down the hazardous workplace machine 106, etc. It is understood that the hazardous workplace machine 106 is configured to receive (wirelessly or wired, directly or indirectly) the lockout signal 107 and to respond to the lockout signal 107 (once received) in such a way that the hazardous workplace machine 106 becomes locked out (enters and remains in a locked-out mode of operation). The machine remains locked out until a reset signal is received by the hazardous workplace machine 106 (as may be initialized by an authorized worker).

The detector assembly 108 is configured to be located relative to (proximate to) the hazardous workplace machine 106. The detector assembly 108 is configured to wirelessly detect the presence of the identification device 104 (in response to the user 900 wearing the garment 102 having the identification device 104 positioned within the workplace danger zone 902). The detector assembly 108 is configured to transmit an emergency stop signal 109 in response to the wireless detection of the presence of the identification device 104.

The computer assembly 110 is configured to operatively couple (either wirelessly or wired) to the detector assembly 108. In accordance with an option, the computer assembly 110 is configured to operatively couple (either wirelessly or wired) to the hazardous workplace machine 106 (if so desired). The computer assembly 110 is configured to receive the emergency stop signal 109 being transmitted by the detector assembly 108. The computer assembly 110 is configured to transmit the lockout signal 107 to the hazardous workplace machine 106 in response to receiving the emergency stop signal 109. This is done in such a way that the hazardous workplace machine 106, in use, operatively locks out (shuts down as the case may be, etc.) once the hazardous workplace machine 106 receives the emergency stop signal 109.

A technical advantage for the apparatus 100 is that for the case where the user 900 is not authorized to be present in the workplace danger zone 902, the apparatus 100 may be deployed to stop the hazardous workplace machine 106 before the user 900 inadvertently causes injury to themselves or other workers.

In accordance with a preferred embodiment, the workplace danger zone 902 includes a drilling rig, and the detector assembly 108 is placed in various danger zones on the rig floor (such as, the iron roughnecks and/or the pipe arm).

In accordance with a second embodiment as depicted in FIGS. 1A and 1B, the apparatus 100 includes (and is not limited to) a combination of the garment 102 and the identification device 104. It will be appreciated that for this embodiment, the apparatus 100 does not include the combination of the hazardous workplace machine 106, the detector assembly 108, the computer assembly 110, the user 900 and the workplace danger zone 902.

In accordance with a third embodiment as depicted in FIGS. 1A and 1B, the apparatus 100 includes (and is not limited to) the computer assembly 110. It will be appreciated that for this embodiment, the apparatus 100 does not include the combination of the user 900, the workplace danger zone 902, the garment 102, the identification device 104, the hazardous workplace machine 106 and the detector assembly 108. In accordance with the embodiment as depicted in FIG. 1B, the computer assembly 110 includes (and is not limited to) a combination of an input section 112, a processing section 114 and an output section 116. The input section 112 is configured to operatively couple to the detector assembly 108 (this is done in such a way that the input section 112 receives the emergency stop signal 109 being transmitted by the detector assembly 108). The processing section 114 is configured to initiate formation of the lockout signal 107. The output section 116 is configured to transmit the lockout signal 107 formed by the processing section 114 to the hazardous workplace machine 106 in response to receiving the emergency stop signal 109. The is done in such a way that the hazardous workplace machine 106, in use, operatively locks out once the hazardous workplace machine 106 receives the emergency stop signal 109.

By way of an embodiment, the computer assembly 110 includes a central processing unit (CPU) connected with a memory module tangibly embodying a CPU-executable program configured to cause the CPU to execute the functions of inputting, computing and outputting. The computer assembly 110 is configured to read the status of the detector assembly 108 (once a second, minute, etc.). For the case where the identification device 104 is detected by the detector assembly 108, the computer assembly 110 is configured to stop operation of the hazardous workplace machine 106 (until a reset signal is received by the computer assembly 110). For the case where the identification device 104 is not detected by the detector assembly 108, the computer assembly 110 permits the continued operation of the hazardous workplace machine 106 (unless the hazardous workplace machine 106 is required to shut down for some other reasons). It will be appreciated that the size of the workplace danger zone 902 may be adjusted accordingly to suit the spatial and environmental conditions surrounding the hazardous workplace machine 106.

In summary, for the case where the identification device 104 passes into (enters) the workplace danger zone 902, the identification device 104 is detected by the detector assembly 108, and the detector assembly 108 and the computer assembly 110 are configured to issue (transmit either directly or indirectly) the lockout signal 107 to the hazardous workplace machine 106. The computer assembly 110 may be configured to continue to issue (transmit) the lockout signal 107 either intermittently or continuously until the identification device 104 is cleared away from the workplace danger zone 902 (regardless of whether the hazardous workplace machine 106 has or has not become locked out).

It will be appreciated that in accordance with an embodiment, the identification device 104 includes an unauthorized identification device 104A and an authorized identification device 104B.

In accordance with an embodiment, the garment 102 having the identification device 104 is classified (tagged) as an unauthorized identification device 104A. For this case, the garment 102 with (having) the unauthorized identification device 104A is provided to the user 900 whom is classified as an unauthorized user (by administration personnel), and as such is not permitted to enter and/or work in the workplace danger zone 902. For this case, the unauthorized identification device 104A is detected by the detector assembly 108, and the detector assembly 108 (with cooperation of the computer assembly 110) causes the hazardous workplace machine 106 to shut down (stop operation) once the unauthorized user enters the workplace danger zone 902 (with the unauthorized identification device 104A). That is, the computer assembly 110 stops operation of the hazardous workplace machine 106.

In accordance with another embodiment, the garment 102 having the identification device 104 is classified (tagged) as an authorized identification device 104B. For this case, the garment 102 having the authorized identification device 104B is provided to the user 900 whom is classified as an authorized user, and as such is permitted to enter and/or work in the workplace danger zone 902. For this case, when the detector assembly 108 (with cooperation of the computer assembly 110), in use, detects the authorized identification device 104B, the hazardous workplace machine 106 is permitted to continue to operate without hindrance (unless required to shut down for some other reason). That is, the computer assembly 110 does not stop operation of the hazardous workplace machine 106. For the case where the unauthorized identification device 104A and the authorized identification device 104B are both detected by the detector assembly 108 as being positioned within the workplace danger zone 902, the computer assembly 110 is programmed to permit continued (normal) operation without locking out the hazardous workplace machine 106 (if so desired). For this case, the apparatus 100 has detected the presence of the authorized user and the unauthorized user within the workplace danger zone 902, and for this case, the presumption is that the authorized user then is to decide whether to shut down operation of the hazardous workplace machine 106.

It will be appreciated that in accordance with another option, the detector assembly 108, in use, detects the presence of the authorized identification device 104B and the presence of the unauthorized identification device 104A in the workplace danger zone 902 (both at the same time). For this case, the computer assembly 110 is programmed to lock out the hazardous workplace machine 106 (if so desired). For this case, the presumption is the authorized user is not permitted to make any judgment as to whether the hazardous workplace machine 106 continues to operate when the unauthorized user is detected within the workplace danger zone 902 (even though the authorized user is present in the workplace danger zone 902).

Referring to the embodiment as depicted in FIG. 1A, the computer assembly 110 is further configured to track the spatial position of the user 900 wearing the identification device 104. More specifically, the computer assembly 110 is further configured to track the spatial position of (track movement of) the user 900 wearing the identification device 104 in any one of the factory and/or the danger zone 902, etc. (wherever deemed required). For the case where the user 900 passes by a certain location in the workplace danger zone 902 (in the workshop or the factory), the identification device 104 (also called a sensor) and the computer assembly 110 are configured to cooperate and track the spatial movements of the user 900.

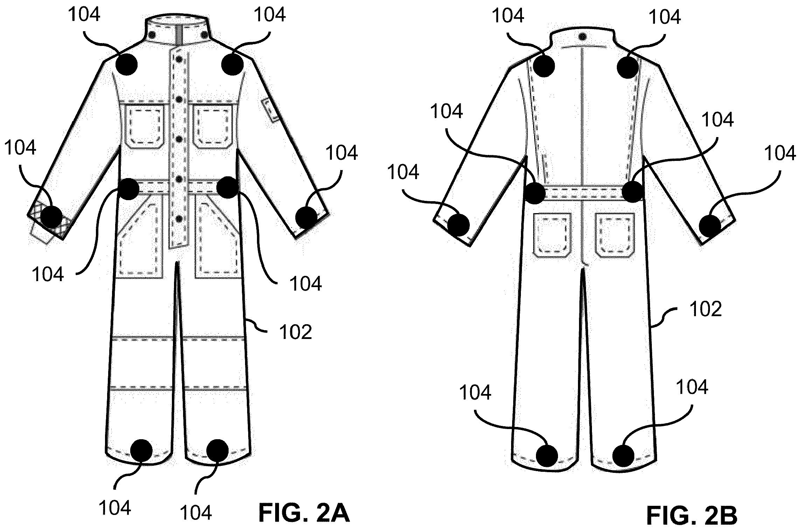

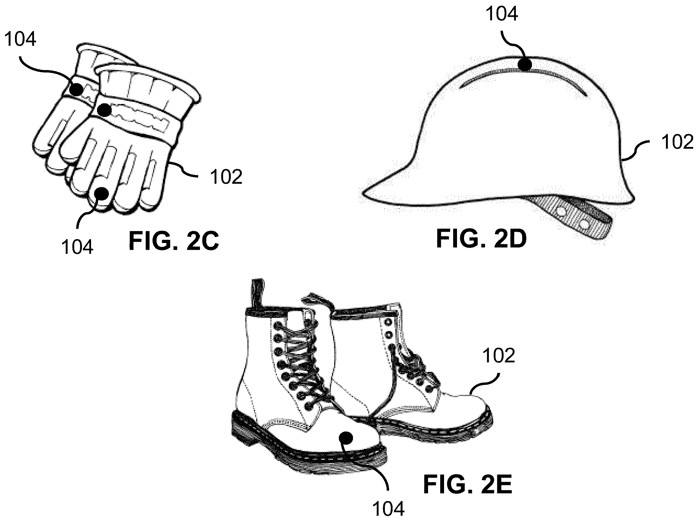

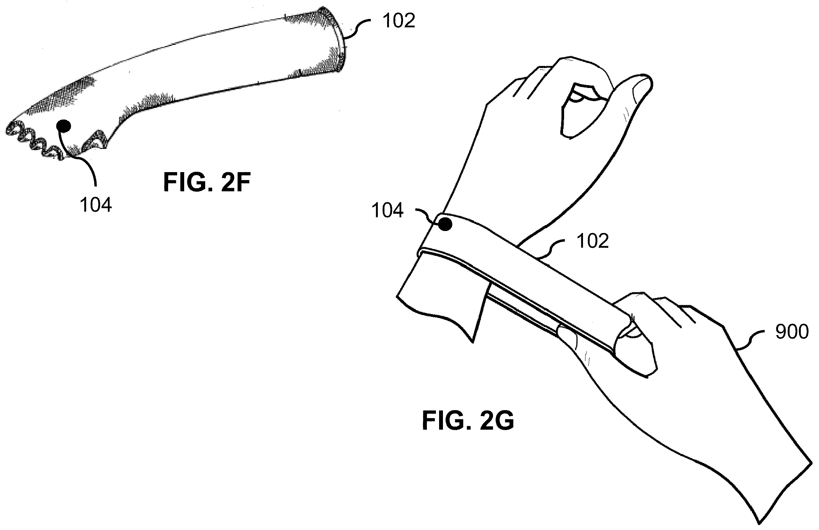

FIGS. 2A, 2B, 2C, 2D, 2E, 2F and 2G depict schematic views of embodiments of a garment 102 and an identification device 104 of the apparatus 100 of FIG. 1. FIG. 2A depicts a front view of the garment 102. FIG. 2B depicts a rear view of the garment 102. FIG. 2C depicts a perspective view of the garment 102. FIG. 2D depicts a side view of the garment 102. FIG. 2E depicts a perspective view of the garment 102. FIG. 2G depicts a perspective view of the garment 102.

In accordance with the embodiment as depicted in FIGS. 2A and 2B, the garment 102 includes a clothing item having a fabric material, a fire retardant insulated fabric (for example, the garment 102 includes a fire retardant coverall). The clothing item may include a pair of pants, a work uniform, etc. The identification device 104 may be positioned at many possible sections or portions of the garment 102, such as at a top portion (such as, the shoulder portions), a middle portion (such as, the waist portion or the arm portions) and/or a lower portion (such as, the leg sections). The identification device 104 may be called a zone sensor or a user-borne sensor. In accordance with a preferred embodiment, the garment 102 includes fire retardant coveralls, with the identification device 104 fixedly (and securely) positioned at predetermined positions located on the garment 102. The predetermined positions may include the wrist cuffs, the shoulder seams, the belt loops and/or the boot cuffs on each leg. Preferably, the identification device 104 is positioned so that the wearer does not notice the identification device 104.

In accordance with the embodiment as depicted in FIG. 2C, the garment 102 includes a pair of work gloves. By way of example, the identification device 104 may be positioned in a finger portion and/or a cuff portion of the work glove. More generally, the garment 102 includes any one of a work glove, a safety hard hat, a safety boot, a rigid forearm guard and a wristband (and any equivalent thereof).

In accordance with the embodiment as depicted in FIG. 2D, the garment 102 includes a safety hard hat. The identification device 104 may be mounted to a top portion of the safety hard hat (within the safety hard hat).

In accordance with the embodiment as depicted in FIG. 2E, the garment 102 includes at least one safety boot (safety boots). The identification device 104 is mounted to the inside portion of the toe section of the boot.

In accordance with the embodiment as depicted in FIG. 2F, the garment 102 includes a rigid forearm guard. The identification device 104 is positioned underneath the forearm guard proximate to the finger portions of the rigid forearm guard.

In accordance with the embodiment as depicted in FIG. 2G, the garment 102 includes a wristband. The identification device 104 is embedded within the wristband. The wristband may be rigid or flexible.

In accordance with an embodiment, the identification device 104 is configured to detect the presence of nearby objects (preferably, without any physical contact), and for this case, the identification device 104 may include a proximity sensor. The proximity sensor is configured to emit an electromagnetic field or a beam of electromagnetic radiation (infrared, for instance), and looks for changes in the field or return signal. The object that is sensed is often referred to as the target of the proximity sensor. It will be appreciated that different types of the proximity sensor may target different materials. For example, a capacitive or photoelectric sensor is suitable for a plastic target, and an inductive proximity sensor requires a metal target. By way of example, the identification device 104 may include (and is not limited to) a capacitive sensor, a capacitive displacement sensor, a Doppler-effect sensor, a magnetic sensor, a passive optical sensor, a passive thermal infrared sensor, and/or an RFID tag (a radio-frequency identification tag).

This written description uses examples to disclose the invention, including the best mode, and also to enable any person skilled in the art to make and use the invention. The patentable scope of the invention is defined by the claims, and may include other examples that occur to those skilled in the art. Such other examples are within the scope of the claims if they have structural elements that do not differ from the literal language of the claims, or if they include equivalent structural elements with insubstantial differences from the literal language of the claims.

It may be appreciated that the assemblies and modules described above may be connected with each other as required to perform desired functions and tasks within the scope of persons of skill in the art to make such combinations and permutations without having to describe each and every one in explicit terms. There is no particular assembly or component that may be superior to any of the equivalents available to the person skilled in the art. There is no particular mode of practicing the disclosed subject matter that is superior to others, so long as the functions may be performed. It is believed that all the crucial aspects of the disclosed subject matter have been provided in this document. It is understood that the scope of the present invention is limited to the scope provided by the independent claim(s), and it is also understood that the scope of the present invention is not limited to: (i) the dependent claims, (ii) the detailed description of the non-limiting embodiments, (iii) the summary, (iv) the abstract, and/or (v) the description provided outside of this document (that is, outside of the instant application as filed, as prosecuted, and/or as granted). It is understood, for this document, that the phrase "includes" is equivalent to the word "comprising." The foregoing has outlined the non-limiting embodiments (examples). The description is made for particular non-limiting embodiments (examples). It is understood that the non-limiting embodiments are merely illustrative as examples.

## Claims

1. An apparatus for a user, a workplace danger zone, a hazardous workplace machine, a detector assembly and a computer assembly, the apparatus comprising:
a garment being configured to be worn by the user; and
an identification device being configured to be coupled to the garment, and the identification device being configured to be wirelessly detected;
wherein:
the hazardous workplace machine is located within the workplace danger zone, and the hazardous workplace machine is configured to be locked out in response to receiving a lockout signal;
the detector assembly is configured to: (A) be located relative to the hazardous workplace machine; (B) wirelessly detect the presence of the identification device in response to the user wearing the garment having the identification device positioned within the workplace danger zone; and (C) transmit an emergency stop signal in response to wireless detection of the presence of the identification device; and
the computer assembly is configured to: (A) operatively couple to the detector assembly; (B) receive the emergency stop signal transmitted by the detector assembly; and (C) transmit the lockout signal to the hazardous workplace machine in response to receiving the emergency stop signal in such a way that the hazardous workplace machine, in use, operatively locks out once the hazardous workplace machine receives the emergency stop signal.

2. The apparatus of claim 1, wherein:
the garment includes:
a clothing item having a fabric material.

3. The apparatus of claim 1, wherein:
the garment includes:
a fire retardant insulated fabric.

4. The apparatus of claim 1, wherein:
the garment includes:
a work uniform.

5. The apparatus of claim 1, wherein:
the garment includes a fire retardant coverall; and
the identification device is fixedly and securely positioned at a predetermined position located on the garment.

6. The apparatus of claim 1, wherein:
the identification device is positioned at portions of the garment, including:
a top portion;
a middle portion; and
a lower portion.

7. The apparatus of claim 1, wherein:
the garment includes any one of a work glove, a safety hard hat, a safety boot, a rigid forearm guard and a wristband.

8. The apparatus of claim 1, wherein:
the identification device is configured to detect the presence of nearby objects without any physical contact.

9. The apparatus of claim 1, wherein:
the identification device includes any one of a proximity sensor, a capacitive sensor, a capacitive displacement sensor, a Doppler-effect sensor, a magnetic sensor, a passive optical sensor, a passive thermal infrared sensor, and a radio-frequency identification tag.

10. The apparatus of claim 1, wherein:
the identification device includes:
an unauthorized identification device A; and
an authorized identification device B.

11. The apparatus of claim 10, wherein:
the garment having the unauthorized identification device A is provided to the user being classified as an unauthorized user and as such is not permitted to enter the workplace danger zone; and
once the unauthorized identification device A is detected by the detector assembly, and the detector assembly, via the computer assembly, causes the hazardous workplace machine to shut down once the unauthorized user enters the workplace danger zone.

12. The apparatus of claim 10, wherein:
the garment having the authorized identification device B is provided to the user being classified as an authorized user and as such is permitted to enter the workplace danger zone; and
once the detector assembly, in use, detects the authorized identification device B, the hazardous workplace machine continues to operate without hindrance.

13. The apparatus of claim 10, wherein:
once the unauthorized identification device A and the authorized identification device B are both detected by the detector assembly as being positioned within the workplace danger zone, the computer assembly is programmed to permit continued (normal) operation without locking out the hazardous workplace machine.

14. The apparatus of claim 10, wherein:
once the detector assembly, in use, detects the presence of the authorized identification device B and the presence of the unauthorized identification device A in the workplace danger zone, both at the same time, the computer assembly is programmed to lock out the hazardous workplace machine.

15. The apparatus of claim 1, wherein:
the computer assembly is further configured to track a spatial position of the user wearing the identification device.

16. The apparatus of claim 1, wherein:
the computer assembly is further configured to track a spatial position of the user wearing the identification device in any one of a factory and a danger zone.

17. An apparatus for a user, a workplace danger zone and a hazardous workplace machine being located within the workplace danger zone, and the hazardous workplace machine being configured to be locked out in response to receiving a lockout signal, the apparatus comprising:
a garment being configured to be worn by the user;
an identification device being configured to be coupled to the garment, and the identification device being configured to be wirelessly detected;
a detector assembly being configured to:
be located relative to the hazardous workplace machine;
wirelessly detect the presence of the identification device in response to the user wearing the garment having the identification device positioned within the workplace danger zone; and
transmit an emergency stop signal in response to wireless detection of the presence of the identification device; and
a computer assembly being configured to:
operatively couple to the detector assembly;
receive the emergency stop signal being transmitted by the detector assembly; and
transmit the lockout signal to the hazardous workplace machine in response to receiving the emergency stop signal in such a way that the hazardous workplace machine, in use, operatively locks out once the hazardous workplace machine receives the emergency stop signal.

18. An apparatus for a user, a workplace danger zone, a garment being configured to be worn by the user, an identification device being configured to be coupled to the garment, and the identification device being configured to be wirelessly detected, a hazardous workplace machine being located within the workplace danger zone, and the hazardous workplace machine being configured to be locked out in response to receiving a lockout signal, a detector assembly being configured to: (A) be located relative to the hazardous workplace machine; (B) wirelessly detect the presence of the identification device in response to the user wearing the garment having the identification device positioned within the workplace danger zone; and (C) transmit an emergency stop signal in response to wireless detection of the presence of the identification device, the apparatus comprising:
a computer assembly including:
an input section being configured to operatively couple to the detector assembly in such a way that the input section receives the emergency stop signal being transmitted by the detector assembly;
a processing section being configured to initiate formation of the lockout signal; and
an output section being configured to transmit the lockout signal formed by the processing section to the hazardous workplace machine in response to receiving the emergency stop signal in such a way that the hazardous workplace machine, in use, operatively locks out once the hazardous workplace machine receives the emergency stop signal.
